(19) Europäisches Patentamt

European Patent Office

Office européen des brevets

(11) **EP 1 449 868 A1**

(12) **EUROPEAN PATENT APPLICATION**

(43) Date of publication:
**25.08.2004 Bulletin 2004/35**

(51) Int Cl.7: **C08J 9/00**, C08J 9/12

(21) Application number: **04003534.7**

(22) Date of filing: **17.02.2004**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **19.02.2003 JP 2003041154**

(71) Applicant: **NITTO DENKO CORPORATION
Osaka (JP)**

(72) Inventors:
• **Yamamoto, Takayuki
Ibaraki-shi Osaka (JP)**

• **Tachibana, Katsuhiko
Ibaraki-shi Osaka (JP)**
• **Taruno, Tomohiro
Ibaraki-shi Osaka (JP)**
• **Kanada, Mitsuhiro
Ibaraki-shi Osaka (JP)**

(74) Representative: **Grünecker, Kinkeldey,
Stockmair & Schwanhäusser Anwaltssozietät
Maximilianstrasse 58
80538 München (DE)**

(54) **Composition for polyolefin resin foam and foam thereof, and method for producing foam**

(57) A composition for a polyolefin resin foam, which comprises a polymer component comprising a polyolefin resin, and at least one of a rubber and a thermoplastic olefin elastomer, and powdery particles, wherein said composition has a melt tension of at least 20 cN when measured in a range between a first temperature at a melting point of said composition and a second temperature that is 20 degrees Celsius higher than said first temperature.

**Description**

FIELD OF THE INVENTION

The present invention relates to a composition for a polyolefin resin foam excellent in terms of softness, cushiony property, adiabatic property and the like, a foam thereof and a production method thereof.

BACKGROUND ART

A foam which is used as an inner insulator of electronic equipment or the like, a cushioning material, a sound insulator, a heat insulator, a food packaging material, a clothing material, abuildingmaterial or the like requires softness, cushiony property, adiabatic property and the like characteristics from the viewpoint of ensuring its sealing performance and the like when incorporated as a component. As such a foam, foams of polyethylene, polypropylene and the like polyolefin resins are known, but these foams have problems in that their strengths are weak and their softness and cushiony property are not sufficient, too.

For the purpose of improving these problems, an attempt has been made to soften the raw material itself by increasing its expansion ratio or blending a polyolefin resinwith a rubber component or the like. However, it was difficult to obtain a soft foam having high expansion ratio from a general polyethylene or polypropylene, because tension force at a high temperature, namely melt tension, of such a resin is so weak that any attempt to obtain a high expansion ratio results in the outgassing at the time of foaming due to breakage of bubble walls or in the union of bubbles.

Conventionally, a chemical method and a physical method are known as polymer foamproductionmethods. In the general physical method, a chlorofluorocarbon, a hydrocarbon or the like low boiling point liquid (foaming agent) is dispersed in a polymer, and then bubbles are formed by evaporating the foaming agent through heating. Also, in the chemical method, a foam is obtained through the formation of bubbles effected by a gas generated by thermal decomposition of a compound (foaming agent) added to the polymer base. However, the foaming techniques by physical method have various environmental problems such as toxicity of the substance to be used as the foaming agent, destruction of ozone layer and the like, and in the foaming techniques by chemical method, residue of the foaming agent after generation of the gas remains in the resulting foam and causes a problem of pollution particularly in the case of the application to electronic parts and the like.

In addition, in recent years, a method has been proposed as a method for obtaining a foam having small bubble diameter and high bubble density, in which nitrogen, carbon dioxide or the like gas is dissolved in a polymer under a high pressure and then bubbles are formed by releasing the pressure and heating the polymer close to its glass transition temperature or softening point. In this foamingmethod, a nucleus is formed from a thermodynamically unstable state, and a micro-porous foam is obtained through the formation of bubbles due to expansion growth of this nucleus. According to this method, it has an advantage in that microcellular plastics so far unknown can be obtained. In addition, various attempts have been proposed for applying this foaming method to thermoplastic polyurethane and the like thermoplastic elastomers. However, sufficient expansion ratio could not be obtained, and thickness of the formed foam was limited to thin ones.

To solve these problems, for example, a resin composition for foam compact has been proposed, which is characterized in that from 5 to 70 parts by weight of a polyolefin elastomer is blended with 100 parts by weight of a polypropylene resin mainly comprising from 90 to 10% by weight of a polypropylene homopolymer having a melt tension at 230°C of 7 gf or more and from 10 to 90% by weight of a polypropylene copolymer having a melt tension at 230°C of 7 gf or more (see JP-A-2002-322303). Also, a polyolefin resin foam comprising a polyolefin resin having a melt tension at 230°C of exceeding 1 cN and a rubber or thermoplastic elastomer component and a method for producing a foam using carbon dioxide under a supercritical condition have been proposed (see JP-A-2001-348452).

SUMMARY OF THE INVENTION

The object of the invention is to provide a polyolefin resin foam having excellent softness and cushiony property and sufficient thickness, and a production method thereof.

With the aim of solving the aforementioned problems, the present inventors have conducted intensive studies and found as a result that, when foam-molding of a composition for a polyolefin resin foam, which comprises a polymer component comprising a polyolefin resin and a rubber and/or a thermoplastic olefin elastomer and powdery particles, characterized in that said composition has a melt tension of at least 20 cN when measured in a range between a first temperature at a melting point of said composition and a second temperature that is 20 degrees Celsius higher than said first temperature, is carried out, bubbles are grown after foaming without causing large shrinkage and deformation and the shape of bubbles can therefore be maintained, so that thickness of the foam can be thickened and a foam having excellent cushiony property can be obtained.

In addition, the phrase "at least one of a rubber and a thermoplastic olefin elastomer" has the same meaning as "a rubber and/or a thermoplastic olefin elastomer".

Accordingly, the invention provides a composition for a polyolefin resin foam, which comprises a polymer component comprising a polyolefin resin and a rubber and/or a thermoplastic olefin elastomer and powdery particles, characterized in that said composition has a melt tension of at least 20 cN when measured in a range between a first temperature at a melting point of said composition and a second temperature that is 20 degrees Celsius higher than said first temperature, and a polyolefin resin foam which is produced by the foam-molding of said composition for a polyolefin resin foam.

Also, the invention provides a method for producing a polyolefin resin foam, which comprises carrying out foam-molding of a composition for a polyolefin resin foam, wherein said composition is characterized in that it comprises a polymer component comprising a polyolefin resin, a rubber and/or a thermoplastic olefin elastomer, and powdery particles, and said composition has a melt tension of at least 20 cN when measured in a range between a first temperature at a melting point of said composition and a second temperature that is 20 degrees Celsius higher than said first temperature.

DETAILED DESCRIPTION OF THE INVENTION

The composition of the invention for a polyolefin resin foam is composed of a polymer component comprising a polyolefin resin and a rubber and/or a thermoplastic elastomer and powdery particles.

The polymer component as the main body of the composition of the invention for a polyolefin resin foam comprises a polyolefin resin and a rubber and/or a thermoplastic elastomer. It is desirable that the rubber and/or thermoplastic elastomer is used in an amount of from 10 to 150 parts by weight, preferably from 30 to 100 parts by weight, based on 100 parts by weight of the aforementioned polyolefin resin.

Cushiony property as a foam is apt to be reduced when the amount of the rubber and/or thermoplastic elastomer is less than 10 parts by weight. Moreover, a foam having high expansion ratio cannot be obtained when the amount exceeds 150 parts by weight due to the aptness to cause outgassing at the time of foaming.

As the polyolefin resin of the invention, a type of resin having broad molecular weight distribution and a shoulder on the high molecular weight side, a slightly crosslinked type resin, a long chain branched chain type resin and the like can for example be cited.

Examples of the polyolefin resins of these types include a low density polyethylene, a medium density polyethylene, a high density polyethylene, a linear low density polyethylene, a polypropylene, a copolymer of ethylene with propylene, a copolymer of ethylene or propylene with other $\alpha$-olefin, a copolymer of ethylene with vinyl acetate, acrylic acid, acrylic ester, methacrylic acid, methacrylic ester, vinyl alcohol or the like, and mixtures thereof, and any of them can be used.

Examples of the aforementioned "other $\alpha$-olefin" include butene-1, pentene-1, hexene-1, 4-methylpentene-1 and the like. Also, the copolymers may be any of random copolymers and block copolymers.

The rubber or thermoplastic elastomer component of the invention is not particularly limited with the proviso that it can perform foaming, and its examples include natural rubber, polyisobutylene, polyisoprene, chloroprene rubber, butyl rubber, nitrile-butyl rubber and the like natural or synthetic rubbers; an ethylene-propylene copolymer, an ethylene-propylene-diene copolymer, an ethylene-vinyl acetate copolymer, a polybutene, a chlorinated polyethylene and the like olefin elastomers; a styrene-butadiene-styrene copolymer, a styrene-isoprene-styrene copolymer, hydrogenated products thereof and the like styrene elastomers; polyester elastomers; polyamide elastomers; polyurethane elastomers and the like various thermoplastic elastomers. These rubber or thermoplastic elastomer components can be used alone or as a combination of two or more.

According to the invention, a thermoplastic olefin elastomer is suitably used as the aforementioned rubber or thermoplastic elastomer component. The olefin elastomer is an elastomer having a structure in which an olefin component and an ethylene-propylene rubber form a state of micro-phase separation, and it has good compatibility with the aforementioned polyolefin resin.

Mixing ratio of the mixture of the aforementioned polyolefin resin and rubber and/or thermoplastic elastomer is, for example, the former/latter = approximately from 1/99 to 99/1 (preferably from about 10/90 to about 90/10, more preferably from about 20/80 to about 80/20).

The composition of the invention for a polyolefin resin foam comprises powdery particles. As the main object, the powdery particles function as a nucleating agent at the time of foam-molding, and talc, silica, alumina, zeolite, calcium carbonate, magnesium carbonate, barium sulfate, zinc oxide, titanium oxide, aluminum hydroxide and the like can for example be used.

It is desirable that these powdery particles have a particle size of from 0.1 to 10 $\mu$m. When the powdery particles have a particle size of less than 0.1 $\mu$m, the powdery particles do not fully function as a nucleating agent in some cases. Moreover, a particle size exceeding 10 $\mu$m is not desirable because it sometimes becomes the cause of outgassing at the time of foam-molding.

In the invention, the particle size of the powdery particles represents the particle size in a state wherein the powdery particles are dispersed into a polymer component comprising a polyolefin resin and a rubber and/or a thermoplastic elastomer, or the particle size in the case the particles exist alone, or the size of an agglutinate in the case the particles are agglutinated.

According to the invention, it is desirable that the powdery particles are contained in an amount of from 5 to 150 parts by weight, preferably from 10 to 130 parts by weight, based on 100 parts by weight of the polymer component.

A uniform foam cannot be obtained when the powdery particles are less than 5 parts by weight, and when the amount exceeds 150 parts by weight, viscosity as the composition for a polyolefin resin foam considerably increases, as well as a possibility of spoiling foaming characteristics due to generation of outgassing at the time of foam-molding.

In addition, since the resin foam comprises a thermoplastic polymer, it has a disadvantage of being easily burned. Because of this, it is desirable to formulate various flame retardants as the powdery particles particularly when the material is used in electronic equipment and the like applications for which provision of flame retardancy is essential. As the flame retardant, conventionally well known bromine resins, chlorine resins, phosphorus system, antimony system and the like flame retardants can be used, but since the chlorine system, bromine system and the like flame retardants generate gases at the time of burning, which are toxic to human body and corrosive to instruments, and the phosphorus system and antimony system flame retardants also have toxicity, explosiveness and the like problems, it is desirable to add a non-halogen-non-antimony system metal hydroxide as an inorganic flame retardant.

As such an inorganic flame retardant, aluminum hydroxide, magnesium hydroxide, a hydrate of magnesium oxide-nickel oxide, a hydrate of magnesium oxide-zinc oxide and the like are particularly desirably used. Such hydrated metal compounds may be surface-treated. These flame retardants may be used alone or as a mixture of two or more.

Amount of such a flame retardant to be contained is from about 10 to about 70% by weight, preferably from about 25 to about 65% by weight, based on the entire composition for a polyolefin resin foam. The flame retarding effect becomes small when this content is too small, and when it is too large on the contrary, a resin foam having high expansion ratio can hardly be obtained.

As occasion demands, an additive agent may be added to the composition of the invention for a polyolefin resin foam. Kinds of the additive agent are not particularly limited, and various additive agents generally used in the foam-molding can be used. Examples of said additive agent include a crystal nucleating agent, a plasticizer, a lubricant, a coloring agent, an ultraviolet ray absorbent, an antioxidant, a filler, a reinforcing agent, an antistatic agent and the like. Adding amount of the additive agent can be optionally selected within such a range that it does not spoil formation of bubbles and the like, and the adding amount generally used in the molding of thermoplastic resins can be employed.

The composition of the invention for a polyolefin resin foam material is characterized in that said composition has a melt tension of at least 20 cN (20 cN or more) when measured in a range between a first temperature at a melting point of said composition and a second temperature that is 20 degrees Celsius higher than said first temperature.

When melt tension of the composition for a polyolefin resin foam material is set to 20 cN or more, bubble walls are hardly destroyed at the time of expansion molding so that high expansion ratio can be obtained.

Particularly, it is desirable that the melt tension measured in a range between a first temperature at a melting point of said composition and a second temperature that is 20 degrees Celsius higher than said first temperature is at least 25 cN (25 cN or more) (e.g., approximately from 25 to 70 cN), more desirably at least 30 cN (30 cN or more) (e.g., approximately from 30 to 50 cN).

In this connection, according to the invention, the melt tension is measured in a range between a first temperature at a melting point of said composition and a second temperature that is 20 degrees Celsius higher than said first temperature, because molten state cannot be obtained at a temperature of less than its melting point. Moreover, that the second temperature is exceeding 20 degrees Celsius higher than the first temperature (melting point of said composition) is not desirable too, because the composition becomes completely fluid state and the tension force therefore can hardly be obtained.

In addition, according to the invention, it is sufficient when the melt tension is 20 cN at any temperature in a range between a first temperature at a melting point of said composition and a second temperature that is 20 degrees Celsius higher than said first temperature.

In addition, according to the invention, when powdery particles are used by adjusting melt tension of the composition for a polyolefin resin foam material to 20 cN or more, an effect is exerted in that the powdery particles become the base point for the growth of bubbles and the bubble structure becomes further uniform. This is particularly effective when a high pressure gas, especially carbon dioxide under supercritical state, is used as the foaming agent described below, because particularly fine and uniform bubbles can be formed in comparison with the conventional foaming methods.

According to the invention, the foaming agent to be used for obtaining a polyolefin resin foam material is not particularly limited, with the proviso that it is generally used in the expansion molding of polyolefin resins, but it is desirable to use a high pressure gas from the viewpoint of environmental protection and low staining against a material to be foamed. In this connection, the term "high pressure gas" as used herein means that it includes any fluid under supercritical state. In the invention, the phrase "high pressure" means, for example, at least 1 Mpa.

The high pressure gas is not particularly limited with the proviso that the aforementioned polyolefin resin and rubber or thermoplastic elastomer can be impregnated therewith under a high pressure, and its examples include carbon dioxide, nitrogen, air and the like. These high pressure gasses may be used as a mixture. Among them, the use of carbon dioxide is desirable because of the large impregnating amount into the polyolefin resin and rubber or thermoplastic elastomer to be used as the raw materials of the foam material and of the quick impregnation rate. In addition, it is desirable that the aforementioned high pressure gas (e.g., carbon dioxide) is under a supercritical state from the viewpoint of quickening its impregnation rate into the resin. In this connection, critical temperature of carbon dioxide is 31°C, and its critical pressure is 7.4 MPa.

When a gas under a supercritical state (supercritical fluid) is used, its high concentration entrapping becomes possible due to increased solubility in the resin, and generation of bubble nucleus at the time of sudden pressure drop becomes frequent because of the high concentration, so that the density of bubbles formed by the growth of these bubble nuclei becomes larger than the case of other conditions even when the porosity is the same, and fine bubbles can therefore be obtained.

The method for producing the polyolefin resin foam material of the invention is not particularly limited with the proviso that it is a method which can perform expansion molding using the aforementioned composition for a polyolefin resin foam material, and it may be either a batch system or a continuous system.

An example of the production of a polyolefin resin foam material by a batch system using a high pressure gas as the foaming agent is shown below. Firstly, the aforementioned composition for a polyolefin resin foam material, which contains a polymer component comprising a polyolefin resin and a rubber and/or a thermoplastic olefin elastomer and powdery particles, is extruded using a single screw extruder, twin screw extruder or the like extruder to prepare a resin sheet for foam material molding. Alternatively, a resin sheet for foam material molding is formed by uniformly kneading the aforementioned polyolefin resin and a rubber and/or a thermoplastic olefin elastomer and powdery particles using a roller, cum, kneader, Banbury type or the like kneading machine equipped with a blade, and then press-molding the mixture to a predetermined thickness using a hot plate press or the like. The un-foamed sheet obtained in this manner is put into a high pressure container, and a high pressure gas comprising carbon dioxide, nitrogen, air and the like is injected therein to effect impregnation of the aforementioned un-foamed sheet with the high pressure gas. When the sheet is sufficiently impregnated with the high pressure gas, the pressure is released (generally to atmospheric pressure) to effect generation of bubble nuclei in the base material resin. The bubble nuclei may be grown as such at room temperature or with heating as occasion demands. Regarding the heating method, water bath, oil bath, hot roller, hot air oven, extreme infrared radiation, near infrared radiation, microwave or the like well known or conventionally used method can be employed. After effecting growth of bubbles in this manner, a polyolefin resin foam material can be obtained by fixing its shape through sudden cooling with cold water or the like. In this connection, the compact to be subjected to the foaming is not limited to a sheet, and various shapes can be used in response to respective applications. In addition, the compact to be subjected to the foaming can be prepared not only by extrusion molding or press molding but also by injection molding or the like other molding method.

An example of the production of a polyolefin resin foam material by a continuous system using a high pressure gas as the foaming agent is shown below. While the aforementioned composition for a polyolefin resin foam material, which contains a polymer component comprising a polyolefin resin and a rubber and/or a thermoplastic olefin elastomer and powdery particles, is kneaded using a single screw extruder, twin screw extruder or the like extruder, a high pressure gas is injected therein to effect sufficient impregnation of the resin with the high pressure gas, and then bubbles are grown by releasing the pressure (generally to atmospheric pressure) by extruding the resin, with heating as occasion demands. After effecting growth of bubbles, a polyolefin resin foam material can be obtained by fixing its shape through sudden cooling with cold water or the like. In this connection, the expansion molding can also be carried out using an injection molding machine or the like, in addition to the extruder. Shape of the foam material is not particularly limited, and it may be any of sheet, prism and the like shapes.

When a compact or kneaded resin mixture to be subjected to foaming is impregnated with a gas, the pressure can be optionally selected by taking kind of the gas, workability and the like into consideration, but when carbon dioxide or the like is used for example, it is for example 6 MPa or more (e.g., approximately from 6 to 100 MPa), preferably 8 MPa or more (e.g., approximately from 8 to 100 MPa).

When the pressure is lower than 6 MPa, bubble diameter becomes large due to considerable bubble growth at the time of foaming so that the sound insulation effect is apt to be reduced. The reason for this is that when the pressure is low, the impregnating amount of gas is relatively small in comparison with the amount at the time of high pressure, so that the number of formed bubble nuclei becomes small due to reduction of bubble nucleus forming rate, the amount of gas per one bubble increases on the contrary, and the bubble diameter becomes extremely large as a result. In the pressure range of lower than 6 MPa on the other hand, bubble diameter and bubble density are greatly

changed when the impregnation pressure is slightly changed, so that control of the bubble diameter and bubble density becomes difficult.

The temperature at the gas impregnation step varies depending on the inert gas to be used, kind of the thermoplastic polymer and the like and can be selected within a broad range, but for example, it is approximately from 10 to 350°C when workability and the like are taken into consideration. For example, when a sheet shape or the like un-foamed compact is impregnated with an inert gas, the impregnation temperature in the case of a batch system is from about 10 to about 200°C, preferably from about 40 to about 200°C. Also, when foaming and molding are simultaneously carried out by extruding a gas-impregnated molten polymer, the impregnation temperature in the case of a continuous system is generally from about 60 to about 350°C. In this connection, when carbon dioxide is used as the inert gas, it is desirable that the temperature at the time of impregnation is 32°C or more, particularly 40°C or more, in order to keep the supercritical state.

In the aforementioned pressure reducing step, the pressure drop rate is not particularly limited, but it is preferably from about 5 to about 300 MPa/second for the purpose of obtaining uniform fine bubbles. In addition, the heating temperature at the aforementioned heating step is, for example, from about 40 to about 250°C, preferably from about 60 to about 250°C.

In addition, since a foam material having a high expansion rate can be produced by the method of the invention for producing a polyolefin resin foam material, it has an advantage in that a thick foam material can be produced. That is, when a polyolefin resin foam material is produced by a continuous system, a high pressure gas is injected while the aforementioned composition for a polyolefin resin foam material is kneaded, thereby effecting sufficient impregnation of the resin with the high pressure gas, and then the pressure is released by extrusion, and in order to keep the pressure inside the extruder in that case, it is necessary to adjust the gap of the terminal die of the extruder as narrow as possible (generally from 0.1 to 1.0 mm). Thus, though a foam material composition extruded through a narrow gap must be foamed at a high expansion ratio for obtaining a thick foam material, a high expansion ratio could not be obtained in the prior art so that thickness of the molded foam material was also limited to a thin level (e.g., approximately from 0.5 to 2.0 mm).

Regarding the foam material of the invention on the contrary, it is possible to continuously obtain a foam material having a final thickness of from 0.50 to 5.00 mm. For obtaining such a thick foam material, it is desirable that relative density of the foam material (density after foaming/density under un-foamed condition) is from 0.02 to 0.3, preferably from 0.05 to 0.25.

The relative density exceeding 0.3 results in insufficient foaming, and a density of less than 0.02 is also undesirable because of a possibility of considerably reducing strength of the foam material.

The aforementioned thickness and relative density of the foam material can be adjusted in response to the inert gas to be used and kinds of the polyolefin resin and rubber or thermoplastic elastomer, for example by optionally selecting and setting the temperature, pressure, time and the like operation conditions of the gas impregnation step, the pressure drop rate, temperature, pressure and the like operation conditions of the pressure reducing step, and the heating temperature after pressure reduction.

The polyolefin resin foam material of the invention can be used, for example, as an inner insulator of electronic equipment orthelike, acushioningmaterial, a sound insulator, aheatinsulator, a food packaging material, a clothing material, a building material and the like.

EXAMPLES

Examples of the invention will be given below, but the invention is not restricted by these examples. In this connection, the melt tension and relative density were measured and calculated by the following methods.

(Melt tension)

In the measurement of melt tension, each sample is extruded from a capillary of 1 mm $\phi$ and L/D = 10, in a strand shape at a constant rate of 20 m/min. by applying a load from the upper side using a capillary type rheometer manufactured by Toyo Seiki, and the extruded matter is passed through a tension detecting pulley and taken up on a feed roller. During this operation, the take up speed is gradually increased. The speed is increased until the sample is broken, and the tension just before breakage is generally used as the melt tension, though a tension at a take up speed of 2 m/min. is employed therein.

· Measuring equipment: Capilograph manufactured by Toyo Seiki
· Summary of the equipment:

Capillary die size      1 mm $\phi$, L/D = 10

Die diameter      10 mm

· Equipment conditions:

Extrusion speed     20 mm/min
Take up speed      1 to 100 m/min

(Relative density)

$$\text{Relative density} = \{\text{density after foaming (density of foam material)}$$

$$(\text{g/cm}^3)\} \div \{\text{density before foaming (density of sheet or the like}$$

$$\text{before foaming) (g/cm}^3)\}$$

Example 1

A mixture consisting of 45 parts by weight of a polypropylene (MFR 0.35 g/10 min), 55 parts by weight of a polyolefin elastomer (MFR 6 g/10 min, JIS A hardness 79°) and 10 parts by weight of magnesium hydroxide (average particle size 0.7 $\mu$m) was kneaded at a temperature of 200°C using a twin screw kneader manufactured by JSW, extruded in a strand shape, cooled with water and then molded by cutting into a pellet. Melting point of this compound calculated by DSC was 170°C, and melt tension measured at 182°C was 31.1 cN.
This pellet was put into a single screw extruder manufactured by JSW, and a gas was injected under a pressure of 22 (19 after injection) MPa in an atmosphere of 220°C. After sufficient saturation with the gas, this was cooled to a temperature suited for foaming and then extruded from the die to obtain a foam material. Relative density of the foam material was 0.05. In addition, the gap was 0.3 mm, and thickness of the foam material at that time was 2.2 mm.

Example 2

A mixture consisting of 45 parts by weight of a polypropylene (MFR 0.35 g/10 min), 55 parts by weight of a polyolefin elastomer (MFR 6 g/10 min, JIS A hardness 79°) and 120 parts by weight of magnesium hydroxide (average particle size 0.7 $\mu$m) was kneaded at a temperature of 200°C using a twin screw kneader manufactured by JSW, extruded in a strand shape, cooled with water and then molded by cutting into a pellet. Melting point of this compound calculated by DSC was 170°C, and melt tension measured at 182°C was 31.4 cN.
This pellet was put into a single screw extruder manufactured by JSW, and a gas was injected under a pressure of 19 (16 after injection) MPa in an atmosphere of 220°C. After sufficient saturation with the gas, this was cooled to a temperature suited for foaming and then extruded from the die to obtain a foam material. Relative density of the foam material was 0.120. In addition, the gap was 0.3 mm, and thickness of the foam material at that time was 2.2 mm.

Example 3

A mixture consisting of 45 parts by weight of a polypropylene (MFR 0.5 g/10 min), 55 parts by weight of a polyolefin elastomer (MFR 11 g/10 min, JIS A hardness 65°) and 120 parts by weight of magnesium hydroxide (average particle size 0.7 $\mu$m) was kneaded at a temperature of 200°C using a twin screw kneader manufactured by JSW, extruded in a strand shape, cooled with water and then molded by cutting into a pellet. Melting point of this compound calculated by DSC was 168°C, and melt tension measured at 182°C was 24.9 cN.
This pellet was put into a single screw extruder manufactured by JSW, and a gas was injected under a pressure of 19 (16 after injection) MPa in an atmosphere of 220°C. After sufficient saturation with the gas, this was cooled to a temperature suited for foaming and then extruded from the die to obtain a foam material. Relative density of the foam material was 0.251. In addition, the gap was 0.3 mm, and thickness of the foam material at that time was 1.4 mm.

Example 4

A mixture consisting of 45 parts by weight of a copolymer of ethylene and propylene (MFR 0.4 g/10 min), 55 parts by weight of a polyolefin elastomer (MFR 6 g/10 min, JIS A hardness 79°) and 120 parts by weight of magnesium hydroxide (average particle size 0.7 μm) was kneaded at a temperature of 200°C using a twin screw kneader manufactured by JSW, extruded in a strand shape, cooled with water and then molded by cutting into a pellet. Melting point of this compound calculated by DSC was 168°C, and melt tension measured at 182°C was 32.6 cN.

This pellet was put into a single screw extruder manufactured by JSW, and a gas was injected under a pressure of 19 (16 after injection) MPa in an atmosphere of 220°C. After sufficient saturation with the gas, this was cooled to a temperature suited for foaming and then extruded from the die to obtain a foam material. Relative density of the foam material was 0.273. In addition, the gap was 0.3 mm, and thickness of the foam material at that time was 1.2 mm.

Example 5

A mixture consisting of 45 parts by weight of a copolymer of ethylene and propylene (MFR 0.3 g/10 min), 55 parts by weight of a polyolefin elastomer (MFR 6 g/10 min, JIS A hardness 79°) and 120 parts by weight of magnesium hydroxide (average particle size 0.7 μm) was kneaded at a temperature of 200°C using a twin screw kneader manufactured by JSW, extruded in a strand shape, cooled with water and then molded by cutting into a pellet. Melting point of this compound calculated by DSC was 167°C, and melt tension measured at 182°C was 60.0 cN.

This pellet was put into a single screw extruder manufactured by JSW, and a gas was injected under a pressure of 19 (16 after injection) MPa in an atmosphere of 220°C. After sufficient saturation with the gas, this was cooled to a temperature suited for foaming and then extruded from the die to obtain a foam material. Relative density of the foam material was 0.11. In addition, the gap was 0.3 mm, and thickness of the foam material at that time was 1.8 mm.

Comparative Example 1

A mixture consisting of 45 parts by weight of a polypropylene (MFR 4 g/10 min), 55 parts by weight of a polyolefin elastomer (MFR 6 g/10 min, JIS A hardness 79°) and 50 parts by weight of magnesium hydroxide (average particle size 0.7 μm) was kneaded at a temperature of 200°C using a twin screw kneader manufactured by JSW, extruded in a strand shape, cooled with water and then molded by cutting into a pellet. Melting point of this compound calculated by DSC was 170°C, and melt tension measured at 182°C was 4.0 cN.

This pellet was put into a single screw extruder manufactured by JSW, and a gas was injected under a pressure of 16.2 (14 after injection) MPa in an atmosphere of 220°C. After sufficient saturation with the gas, this was cooled to a temperature suited for foaming and then extruded from the die to obtain a foam material. Relative density of the foam material was 0.35. In addition, the gap was 0.3 mm, and thickness of the foam material at that time was 0.4 mm.

Comparative Example 2

A mixture consisting of 45 parts by weight of a polypropylene (MFR 4 g/10 min) and 55 parts by weight of a polyolefin elastomer (MFR 6 g/10 min, JIS A hardness 79°) was kneaded at a temperature of 200°C using a twin screw kneader manufactured by JSW, extruded in a strand shape, cooled with water and then molded by cutting into a pellet. Melting point of this compound calculated by DSC was 170°C, and melt tension measured at 182°C was 0.9 cN.

This pellet was put into a single screw extruder manufactured by JSW, and a gas was injected under a pressure of 18 MPa in an atmosphere of 220°C. After sufficient saturation with the gas, this was cooled to a temperature suited for foaming and then extruded from the die, but a sheet could not be obtained due to insufficient foaming.

Comparative Example 3

A mixture consisting of 70 parts by weight of a polypropylene (MFR 0.35 g/10 min) and 30 parts by weight of a polyolefin elastomer (MFR 6 g/10 min, JIS A hardness 79°) was kneaded at a temperature of 200°C using a twin screw kneader manufactured by JSW, extruded in a strand shape, cooled with water and then molded by cutting into a pellet. Melting point of this compound calculated by DSC was 170°C, and melt tension measured at 182°C was 23 cN.

This pellet was put into a single screw extruder manufactured by JSW, and a gas was injected under a pressure of 22 (19 after injection) MPa in an atmosphere of 220°C. After sufficient saturation with the gas, this was cooled to a temperature suited for foaming and then extruded from the die to obtain a foam material. Relative density of the foam material was 0.43. In addition, the gap was 0.3 mm, and thickness of the foam material at that time was 2.5 mm.

Since each of the expandable polyolefin resins obtained in the above Inventive Examples containing a polymer component comprising a polyolefin resin and a rubber and/or a thermoplastic elastomer and powdery particles showed a high melt tension, respective foam materials obtained by the conventional foaming step by releasing pressure of a high pressure gas were possessed of high expansion ratio and sufficient thickness. Contrary to this, sufficient expansion ratio was not obtained from the foam materials obtained in Comparative Examples because of their low relative density.

The polyolefin resin foam material of the invention has sufficient thickness and is excellent in softness and cushiony property. Also, according to the productionmethod of the invention, excellent foam materials as described in the above can be produced easily and efficiently.

While the invention has been described in detail and with reference to specific embodiments thereof, it will be apparent to one skilled in the art that various changes and modifications can be made therein without departing from the scope thereof.

This application is based on Japanese patent applications No. 2003-041154 filed on February 19, 2003, the entire contents thereof being hereby incorporated by reference.

## Claims

1. A composition for a polyolef in resin foam, which comprises :

   a polymer component comprising:

   a polyolefin resin, and at least one of a rubber and a thermoplastic olefin elastomer, and

   powdery particles,

   wherein said composition has a melt tension of at least 20 cN when measured in a range between a first temperature at a melting point of said composition and a second temperature that is 20 degrees Celsius higher than said first temperature.

2. The composition according to claim 1, wherein at least one of the rubber and the thermoplastic elastomer is contained in an amount of from 10 to 150 parts by weight based on 100 parts by weight of the polyolefin resin.

3. The composition according to claim 2, wherein at least one of the rubber and the thermoplastic elastomer is contained in an amount of from 30 to 100 parts by weight based on 100 parts by weight of the polyolefin resin.

4. The composition according to claim 1, wherein at least one of the rubber and the thermoplastic olefin elastomer is a thermoplastic olefin elastomer.

5. The composition according to claim 1, wherein the powdery particles have a particle size of from 0.1 to 10 $\mu$m.

6. The composition according to claim 1, wherein the powdery particles are contained in an amount of from 5 to 150 parts by weight based on 100 parts by weight of the polymer component.

7. The composition according to claim 6, wherein the powdery particles are contained in an amount of from 10 to 130 parts by weight based on 100 parts by weight of the polymer component.

8. The composition according to claim 1, wherein the powdery particles are a flame retardant.

9. The composition according to claim 8, wherein the flame retardant is an inorganic flame retardant.

10. The composition according to claim 8, wherein the inorganic flame retardant is a metal hydroxide.

11. The composition according to claim 9, wherein the inorganic flame retardant is one selected from the group consisting of aluminum hydroxide, magnesium hydroxide, a hydrate of magnesium oxide-nickel oxide, a hydrate of magnesium oxide-zinc oxide.

12. The composition according to claim 1, wherein the melt tension is at least 25 cN.

13. The composition according to claim 12, wherein the melt tension is at least 30 cN.

14. A polyolefin resin foam produced by foam-molding the composition according to claim 1.

15. The polyolefin resin foam according to claim 14, which has a relative density of from 0.02 to 0.30.

**16.** A method for producing a polyolefin resin foam, which comprises carrying out foam-molding of a composition for a polyolefin resin foam,

wherein said composition comprises:

a polymer component comprising:

a polyolefin resin, and at least one of a rubber and a thermoplastic olefin elastomer, and

powdery particles,

wherein said composition has a melt tension of at least 20 cN when measured in a range between a first temperature at a melting point of said composition and a second temperature that is 20 degrees Celsius higher than said first temperature.

**17.** The method according to claim 16, wherein said foaming is conducted by using a high pressure gas.

**18.** The method according to claim 17, wherein the high pressure gas is carbon dioxide or nitrogen.

**19.** The method according to claim 18, wherein carbon dioxide under supercritical conditions is used as the high pressure gas.

**European Patent Office**

**EUROPEAN SEARCH REPORT**

Application Number

EP 04 00 3534

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | JP 2001 348452 A (NITTO DENKO CORP) 18 December 2001 (2001-12-18) * the whole document * --- | 1-19 | C08J9/00 C08J9/12 |
| X | JP 2002 322303 A (DAICEL NOVAFOAM LTD) 8 November 2002 (2002-11-08) * the whole document * --- | 1-19 | |
| X | GB 2 373 506 A (LIN YU-CHOU ;CHANG KUO-HSIANG (TW)) 25 September 2002 (2002-09-25) * page 2, line 8-13 * * page 2, last paragraph - page 3, line 5 * --- | 1,2,14, 16,17 | |
| X | GB 1 554 148 A (PLASTONA WADDINGTON LTD JOHN) 17 October 1979 (1979-10-17) * claims 4,12,22,24,27 * --- | 1,4,6, 14,16 | |
| X | EP 0 794 226 A (MITSUI PETROCHEMICAL IND) 10 September 1997 (1997-09-10) * page 2, line 49 - page 3, line 5 * * page 8, line 16,17,39-41,49-55 * * page 3, line 18-20 * * page 7, line 7-9,55,56 * * page 8, line 39-41 * * page 9, line 39-41 * --- | 1-19 | TECHNICAL FIELDS SEARCHED (Int.Cl.7) C08J |
| A | US 4 522 955 A (FUKUSHIMA NOBUO ET AL) 11 June 1985 (1985-06-11) * the whole document * --- | 1-19 | |
| A | US 5 346 926 A (SAKAMOTO TOSHIO ET AL) 13 September 1994 (1994-09-13) * column 1, line 54-56 * ----- | 1-19 | |

The present search report has been drawn up for all claims

| Place of search | Date of completion of the search | Examiner |
|---|---|---|
| MUNICH | 31 March 2004 | Lartigue, M-L |

EPO FORM 1503 03.82 (P04C01)

11

EP 1 449 868 A1

## ANNEX TO THE EUROPEAN SEARCH REPORT
## ON EUROPEAN PATENT APPLICATION NO.

EP 04 00 3534

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2004

| Patent document cited in search report | | Publication date | Patent family member(s) | | Publication date |
|---|---|---|---|---|---|
| JP 2001348452 | A | 18-12-2001 | NONE | | |
| JP 2002322303 | A | 08-11-2002 | NONE | | |
| GB 2373506 | A | 25-09-2002 | NONE | | |
| GB 1554148 | A | 17-10-1979 | NONE | | |
| EP 0794226 | A | 10-09-1997 | AU | 705660 B2 | 27-05-1999 |
| | | | AU | 1506297 A | 11-09-1997 |
| | | | CA | 2198998 A1 | 04-09-1997 |
| | | | CN | 1441000 A | 10-09-2003 |
| | | | CN | 1164544 A ,B | 12-11-1997 |
| | | | DE | 69700305 D1 | 12-08-1999 |
| | | | DE | 69700305 T2 | 09-12-1999 |
| | | | EP | 0794226 A1 | 10-09-1997 |
| | | | ES | 2135274 T3 | 16-10-1999 |
| | | | JP | 9296063 A | 18-11-1997 |
| | | | KR | 216649 B1 | 01-09-1999 |
| | | | TW | 464672 B | 21-11-2001 |
| | | | US | 5786403 A | 28-07-1998 |
| US 4522955 | A | 11-06-1985 | JP | 57197132 A | 03-12-1982 |
| | | | CA | 1190013 A1 | 09-07-1985 |
| | | | DE | 3220269 A1 | 24-03-1983 |
| | | | FR | 2506662 A1 | 03-12-1982 |
| | | | GB | 2099434 A ,B | 08-12-1982 |
| | | | HK | 97285 A | 13-12-1985 |
| | | | SE | 448466 B | 23-02-1987 |
| | | | SE | 8203271 A | 30-11-1982 |
| US 5346926 | A | 13-09-1994 | NONE | | |

EPO FORM P0459

For more details about this annex : see Official Journal of the European Patent Office, No. 12/82

12